Europäisches Patentamt

European Patent Office

Office européen des brevets

(19)

(11) **EP 1 269 202 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(21) Anmeldenummer: **01903696.1**

(22) Anmeldetag: **03.02.2001**

(51) Int Cl.⁷: **G01P 3/44**, B60C 23/04

(86) Internationale Anmeldenummer:
**PCT/EP2001/001178**

(87) Internationale Veröffentlichungsnummer:
**WO 2001/069265 (20.09.2001 Gazette 2001/38)**

(54) **VERFAHREN ZUM BESTIMMEN DER DREHZAHL EINES RADES AN EINEM FAHRZEUG**

METHOD FOR DETERMINING THE SPEED OF A WHEEL ON A MOTOR VEHICLE

PROCEDE PERMETTANT DE DETERMINER LE NOMBRE DE TOURS D'UNE ROUE D'UN VEHICULE

(84) Benannte Vertragsstaaten:
**AT BE CH CY DE DK ES FI FR GB GR IE IT LI LU MC NL PT SE TR**

(30) Priorität: **15.03.2000 DE 10012458**

(43) Veröffentlichungstag der Anmeldung:
**02.01.2003 Patentblatt 2003/01**

(73) Patentinhaber: **Beru Aktiengesellschaft**
**71363 Ludwigsburg (DE)**

(72) Erfinder:
• **NORMANN, Norbert**
**75223 Niefern-Öschelbronn (DE)**

• **SCHULZE, Gunter, Lothar**
**75228 Ispringen (DE)**

(74) Vertreter: **Twelmeier, Ulrich, Dipl.Phys. et al**
**Zerrennerstrasse 23-25**
**75172 Pforzheim (DE)**

(56) Entgegenhaltungen:
**EP-A- 0 517 082         EP-A- 0 760 299**
**WO-A-00/34062          DE-A- 19 728 419**
**DE-A- 19 735 686        US-A- 6 002 248**

**Beschreibung**

Die Erfindung betrifft ein Verfahren zum Bestimmen der Drehzahl eines Rades an einem Fahrzeug, wozu an dem Rad ein Beschleunigungssensor angebracht ist. Die Forderung, die Drehzahl eines Rades zu bestimmen, stellt sich bei Fahrzeugen, deren Räder Luftreifen haben, deren Druck auch während der Fahrt laufend überwacht werden soll. Zu diesem Zweck ist aus der DE 196 08 478 A1 ein Reifendrucküberwachungssystem bekannt, in welchem an jedem Rad eines Fahrzeuges ein Gerät (nachfolgend als Radelektronik bezeichnet) vorgesehen ist, welches einen Druckmeßfühler, eine mit dem Druckmeßfühler verbundene elektronische Auswerteschaltung, einen Sender, eine Sendeantenne und eine Batterie hat, welche die Radelektronik mit Strom versorgt. Den Rädern benachbart sind an der Karosserie des Fahrzeuges Empfangsantennen vorgesehen, welche über Kabel an einen Empfänger angeschlossen sind, welcher die ihm von den Empfangsantennen übermittelten Signale verarbeitet, auswertet und dem Fahrer des Fahrzeuges signalisiert, wenn an einem Rad eine wesentliche, insbesondere eine gefährliche Druckänderung beobachtet wird, wobei dem Fahrer auch signalisiert wird, um welches Rad es sich dabei handelt.

Ein Problem, das sich bei solchen Reifendrucküberwachungssystemen stellt, ist die eindeutige Zuordnung der Sender zu der Position ihres Rades am Fahrzeug. Zu diesem Zweck erzeugen die Sender ein in mehrere Abschnitte unterteiltes Signal mit einer Präambel, mit einem Identifikationssignal, mit einem Meßsignal und mit einer Postambel. Anhand des Identifikationssignals (nachfolgend als Kennung bezeichnet) soll der Empfänger erkennen können, wo sich das sendende Rad am Fahrzeug befindet. Voraussetzung dafür ist, daß die Kennung und die Radposition einander zuvor eindeutig zugeordnet wurden und daß diese Zuordnung im Empfänger abgespeichert wurde. Die DE 196 08 478 A1 offenbart eine Möglichkeit, wie diese Zuordnung nach der erstmaligen Montage von Rädern am Fahrzeug und nach einem jeden Radwechsel selbsttätig aus den von den Radelektroniken gesendeten Signalen bestimmt werden kann. Dazu findet eine statistische Auswertung der Intensität der empfangenen Signale statt. Zwar empfängt jede Empfangsantenne Signale von allen sendenden Rädern des Fahrzeuges, doch geht man von der Annahme aus. daß die Signale von dem der jeweiligen Empfangsantenne nächstliegenden Rad im statistischen Mittel mit der stärksten Intensität empfangen werden.

Ein ähnliches Zuordnungsverfahren ist aus der DE 196 08 479 A1 bekannt.

Eine andere Möglichkeit, die automatische Zuordnung der von den Radelektroniken gesendeten Kennungen zu bestimmten Radpositionen zu erreichen, offenbart die DE 197 35 686 A1. Dieses Dokument offenbart, die am jeweiligen Rad vorhandene Radelektronik so auszubilden, daß sie nicht nur den Reifendruck, sondern zusätzlich noch Informationen über den Bewegungszustand des Rades ermittelt und beides durch Funk dem zentralen Empfänger im Fahrzeug übermittelt. Aus dem Bewegungszustand des Rades wird im Empfänger eine Information über die Position des betreffenden Rades am Fahrzeug gewonnen. Zu diesem Zweck werden am Rad auftretende Beschleunigungen von Beschleunigungssensoren, die in der Radelektronik vorgesehen sind ermittelt und entweder in der Radelektronik ausgewertet und das Ergebnis der Auswertung an den Empfänger gefunkt oder die Beschleunigungssignale werden von der Radelektronik in das regelmäßig auszusendende Signal, welches ein Datentelegramm enthält, eingefügt, mit ihm an den Empfänger gefunkt und dort ausgewertet.

Dabei lassen sich bei dem bekannten System aus Beschleunigungssignalen, die am Rad gewonnen wurden auf folgende Weisen Informationen über die Radposition ableiten:

1. Durch Drehen des Rades tritt an diesem eine Zentrifugalbeschleunigung auf, deren Stärke von der Drehzahl des Rades abhängt. An mitgeführten Reserverädern ist auch bei rollendem Fahrzeug die Drehzahl gleich Null. Signale, welche bei rollendem Fahrzeug empfangen werden und die Drehzahl Null oder die Zentrifugalbeschleunigung Z gleich Null signalisieren, werden deshalb einem mitgeführtem Reserverad zugeordnet.

2. Wird die Drehzahl oder die Stärke der Zentrifugalbeschleunigung Z über eine vorgegebenen Zeitspanne integriert, so ist die Größe des Integralwertes ein Maß für den Weg, den das Rad in dieser Zeitspanne zurückgelegt hat. Da die gelenkten Vorderräder bei Kurvenfahrt einen größeren Weg zurücklegen als die ungelenkten Hinterräder eines Fahrzeuges, wird der Integralwert für ein gelenktes Vorderrad größer sein als für ein nichtgelenktes Hinterrad. Die Kennungen, die in Signalen enthalten sind, welche zu den größten Integralwerten der Drehzahl bzw. der Zentrifugalbeschleunigung Z führen, können deshalb den gelenkten Vorderrädern eines Fahrzeuges zugeordnet werden. Aus der DE 197 28 419 A1 ist es bekannt, die Drehzahl aus einem vom Einfluß der Erdbeschleunigung verursachten Wechselsignal zu bestimmen, welches in dem vom Beschleunigungssensor gelieferten Tangentialbeschleunigungssignal erhalten ist.

3. Bei übereinstimmender Einbaulage der Beschleunigungssensoren an den Rädern liefern ein Beschleunigungssensor an einem Rad auf der rechten Seite des Fahrzeuges und ein Beschleunigungssensor an einem Rad auf der linken Seite des Fahrzeuges während einer Beschleunigung oder Verzögerung des Fahrzeuges Tangentialbeschleunigungssignale mit entgegengesetzten Vorzeichen. Als Tangentialbeschleunigung **b** wird hier die beim Beschleunigen bzw. beim Verzögern des Fahrzeuges in Umfangsrichtung eines Rades auftretende Beschleunigung bezeichnet. Das Vorzeichen des Tangentialbeschleunigungssignals **b** erlaubt eine Unterscheidung zwischen rechten und linken Rädern, wobei das Vorzeichen bereits in der Radelektronik bestimmt werden kann und dann dem Empfänger übermittelt wird. Die Unterscheidung zwischen rechten und linken Rädern wird vorzugsweise in der Beschleunigungsphase nach einem Start des Fahrzeuges vorgenommen, kann grundsätzlich aber in jeder Beschleunigungsphase oder Verzögerungsphase vorgenommen werden.

Bei in der Praxis erhältlichen Reifendrucküberwachungssystemen sind die Radelektroniken im Innern des Reifens am Rad befestigt und haben ein hermetisch abgeschlossenes Gehäuse, welches einen Austausch der Batterie nicht ermöglicht. Von der Batterie wird deshalb eine Lebensdauer von 5 bis 10 Jahren erwartet. Zu diesem Zweck muß der Stromverbrauch der Radelektronik minimiert werden. Um das zu erreichen, ist es bekannt in der Radelektronik einen integrierten Schaltkreis vorzusehen, welcher den Drucksensor nur in ersten Zeitabständen für Messungen aktiviert und den Sender in zweiten Zeitabständen, welche größer als oder gleich den ersten Zeitabständen sind, zum Senden veranlaßt, und zwar beim Feststellen eines gefährlichen Druckverlustes in den ersten Zeitabständen und sonst in den größeren zweiten Zeitabständen.

Bei bekannten Radelektroniken ist ein Drucksensor auf Halbleiterbasis in den integrierten Schaltkreis integriert. In den integrierten Schaltkreis läßt sich auch ein Beschleunigungssensor integrieren. Wenn jedoch gemäß der DE 197 35 686 A1 zusätzlich zum Drucksensor zwei Beschleunigungssensoren oder ein in zwei zueinander senkrechten Achsen empfindlicher Beschleunigungssensor in den integrierten Schaltkreis zu integrieren sind, kompliziert und verteuert das die Entwicklung und Herstellung des integrierten Schaltkreises ganz erheblich.

Der vorliegenden Erfindung liegt deshalb die Aufgabe zugrunde, einen weniger aufwendigen Weg aufzuzeigen, um in der Radelektronik Signale zu gewinnen, aus denen auf die Radposition geschlossen werden kann.

Diese Aufgabe wird gelöst durch ein Verfahren mit den im Patentanspruch 1 angegebenen Merkmalen und durch ein Verfahren mit den im Patentanspruch 2 angegebenen Merkmalen. Vorteilhafte Weiterbildungen der Erfindung sind Gegenstand der Unteransprüche.

Erfindungsgemäß wird als Drehzahl eines Rades, an welchem ein Beschleunigungssensor angebracht ist, die Frequenz $\omega$ eines vom Einfluß der Erdbeschleunigung **g** verursachten Wechselsignals bestimmt, welches in dem vom Beschleunigungssensor geliefertem Beschleunigungssignal **b** enthalten ist. Alternativ wird die Aufgabe dadurch gelöst, daß anstelle der Drehzahl deren Kehrwert bestimmt wird, indem die Periode **T** eines vom Einfluß der Erdbeschteunigung **g** verursachten Wechselsignals bestimmt wird, welches in dem vom Beschleunigungssensor gelieferten Beschleunigungssignal b enthalten ist.

Die Erfindung hat wesentliche Vorteile:

- ◆ Für die Bestimmung der Drehzahl des Rades bzw. ihres Kehrwertes wird kein gesonderter Sensor benötigt, vielmehr wird sie aus dem Signal des vorgesehenen Beschleunigungssensors gewonnen, dessen Beschleunigungssignal **b** eine vom Einfluß der Erdbeschleunigung g verursachte Komponente mit einer Frequenz $\omega$ hat, welche die Drehzahl des Rades angibt. Dazu genügt ein Beschleunigungssensor, welcher so ausgebildet und so am Rad angeordnet ist, daß er bezüglich des Rades tangential angreifende Beschleunigungen erfaßt. Das Tangentialbeschleunigungssignal **b** eines solchen einfachen Beschleunigungssensors enthält durch Überlagerung einen drehzahlabhängigen Wechselanteil, weil die am Beschleunigungssensor angreifende Tangentialbeschleunigung **b** bei der Abwärtsbewegung des Beschleunigungssensors um die in Tangentialrichtung wirksame Komponente der Erdbeschleunigung **g** erhöht, bei der Aufwärtsbewegung des Beschleunigungssensors hingegen um die in Tangentialrichtung wirksame Komponente der Erdbeschleunigung **g** verkleinert wird. Die Raddrehzahlen liegen überwiegend unter 40 Umdrehungen pro Sekunde. Dementsprechend liegt die Frequenz des von der Erdbeschleunigung verursachten Wechselanteils im Beschleunigungssignal überwiegend unter 40 Hz und kann durch Filterung vom Gleichspannungsanteil des elektrischen Beschleunigungssignals, welches der Beschleunigungssensor liefert, getrennt werden.
- ◆ Die Bestimmung der Kreisfrequenz $\omega$ bzw. der Periode **T** eines elektrischen Wechselsignals ist leicht und mit großer Genauigkeit möglich, da es sich im Grunde genommen um eine Zeitmessung handelt und Zeitmessungen einfacher und genauer durchgeführt werden können als Intensitätsmessungen, derer es bei dem aus der DE 197 35 686 A1 bekannten Verfahren zur Ermittlung der Drehzahl aus der Zentrifugalbeschleunigung bedurfte.
- ◆ Die Tangentialbeschleunigung **b** und die Drehzahl $\omega$ oder die Periode **T** können mit nur einem einzigen Beschleunigungssensor gemessen werden, welcher nur in Richtung einer einzigen Achse empfindlich sein muß, nämlich in der Richtung, in welcher die Tangentialbeschleunigung auftritt. Eine Empfindlichkeit in einer zweiten Achse oder gar ein zweiter Beschleunigungssensor werden nicht benötigt.
- ◆ Für die Verwendung in einem Reifendrucküberwachungssystem braucht in den integrierten Schaltkreis der jeweiligen Radelektronik zusätzlich zu dem Drucksensor deshalb nur noch ein einziger Beschleunigungssensor integriert zu werden, welcher für **T**angentialbeschleunigungen empfindlich ist.

- Deshalb kann der technische Aufwand für die Entwicklung und Fertigung des integrierten Schaltkreises verringert werden.

Das vom Beschleunigungssensor gelieferte zusammengesetzte Signal kann dazu verwendet werden, um nach dem in der DE 197 35 686 A1 bekannten Verfahren (siehe oben Ziffern 1. bis 3.) Signale, welche von den Radelektroniken bei rollendem Fahrzeug gesendet werden und die Drehzahl Null signalisieren, einem Reserverad zuzuordnen, sowie um aus einem Integral der Drehzahl oder der Periode zwischen gelenkten Vorderrädern und ungelenkten Hinterrädern zu unterscheiden, weil der Integralwert der Drehzahl für ein gelenktes Vorderrad größer sein wird als für ein nichtgelenktes Hinterrad und der Integralwert der Periode für ein gelenktes Vorderrad kleiner sein wird als für ein nichtgelenktes **H**interrad. Schließlich kann, wie in der DE 197 35 686 A1 offenbart, anhand des Vorzeichens der Tangentialbeschleunigung zwischen Rädern auf der rechten Seite des Fahrzeuges und Rädern auf der linken Seite des Fahrzeuges unterschieden werden (siehe oben Ziffer 3.).

Die Radelektroniken der verschiedenen Räder sind voneinander unabhängig und senden deshalb normalerweise nicht gleichzeitig. Will man die Signale, die von unterschiedlichen Rädern kommen, in der Auswerteelektronik des Empfängers miteinander vergleichen, um festzustellen, an welcher Stelle des Fahrzeuges sich ein durch eine bestimmte Kennung charakterisiertes Rad befindet, dann müssen die Signale oder in der Auswerteelektronik von diesen Signalen abgeleitete Signale in der Auswerteelektronik zwischengespeichert werden um sie miteinander vergleichen zu können. Zu diesem Zweck kann die Auswerteelektronik mit einem dafür geeigneten flüchtigen Speicher ausgestattet sein. Dem Fachmann ist bekannt, daß er das einfach, z.B. mittels eines Mikroprozessors, verwirklichen kann, welcher außerdem die Auswertung der empfangenen Signale vornimmt. Wenn es eines Vergleiches der Signale von unterschiedlichen Rädern nicht bedarf, weil schon die von einer Radelektronik stammenden Signale allein eine eindeutige Zuordnung zu einer Radposition ermöglichen, dann bedarf es der Zwischenspeicherung nicht unbedingt.

Weil die zu vergleichenden Signale nicht gleichzeitig erzeugt werden, kann es passieren, daß ein Signal von einem rechten Rad, welches erzeugt wurde, während das Fahrzeug beschleunigt wurde, verglichen wird mit einem Signal von einem linken Rad, welches erzeugt wurde, während das Fahrzeug verzögert wurde. In diesem Fall kann man aus dem Vorzeichen der Tangentialbeschleunigung **b** allein noch nicht zwischen rechten und linken Rädern unterscheiden. In vorzugsweiser Weiterbildung der Erfindung ist deshalb vorgesehen, an jedem Rad bei der Bestimmung der Tangentialbeschleunigung **b** und ihres Vorzeichens zugleich die zeitliche Änderung der Drehzahl $\omega$ bzw. ihres Kehrwertes **T** zu bestimmen und zusammen mit dem Vorzeichen der **T**angentialbeschleunigung **b** an den Empfänger zu senden. Das Vorzeichen der zeitlichen Änderung **d$\omega$/dt** der Drehzahl $\omega$ zeigt nämlich an, ob das Fahrzeug beschleunigt wurde (positives Vorzeichen) oder ob das Fahrzeug verzögert wurde (negatives Vorzeichen). In entsprechender Weise zeigt das Vorzeichen der zeitlichen Änderung **dT/dt** der Periode **T** an, ob das Fahrzeug beschleunigt wurde (negatives Vorzeichen) oder ob das Fahrzeug verzögert wurde (positives Vorzeichen). Durch gemeinsames Auswerten des Vorzeichens der zeitlichen Änderung **d$\omega$/dt** der Drehzahl bzw. **dT/dt** der Periode **T** und des Vorzeichens der **T**angentialbeschleunigung **b** für jedes Rad läßt sich nun eindeutig zwischen rechten Rädern und linken Rädern unterscheiden. Man bildet hierzu in der zentralen Auswerteelektronik des Empfängers für jedes Rad das Produkt aus diesen Vorzeichen, welches unabhängig davon, ob das Fahrzeug beschleunigt oder verzögert wurde, für Räder auf der linken Fahrzeugseite das entgegengesetzte Vorzeichen liefert wie für Räder auf der rechten Fahrzeugseite. Voraussetzung dafür ist, daß die Beschleunigungssensoren untereinander in Bezug auf das jeweilige Rad gleich orientiert sind, was bei untereinander gleichen Radelektroniken dadurch gewährleistet ist, daß sie an den verschiedenen Rädern in übereinstimmender Einbaulage vorgesehen sind. Dabei kann für die vorgesehene Einbaulage vorab festgelegt werden, welches Vorzeichen die das zur Unterscheidung zwischen rechten und linken Rädern herangezogene Produkt für Räder auf der rechten Fahrzeugseite und für Räder auf der linken Fahrzeugseite haben soll.

Es sei beispielsweise angenommen, daß bei beschleunigtem Fahrzeug das Vorzeichen der **T**angentialbeschleunigung **b** an einem rechten Rad positiv sei, dann ist es an einem linken Rad negativ und das Vorzeichen der zeitlichen Änderung **d$\omega$/dt** der Drehzahl $\omega$ ist für die Räder auf beiden Fahrzeugseiten positiv. Dann gilt für das Produkt der Vorzeichen

für das rechte Rad: sign **(d$\omega$/dt)** . sign **b** = (+1)(+1) = +1 und für das linke Rad: sign **(d$\omega$/dt)** . sign **b** = (+1)(-1) = -1.

Linkes Rad und rechtes Rad unterscheiden sich also durch das Vorzeichen des Produktes.

Nehmen wir nun an, daß das Signal am rechten Rad erzeugt wurde, während das Fahrzeug beschleunigt wurde, wohingegen das Signal am linken Rad erzeugt wurde, während das Fahrzeug verzögert wurde. Dann ergibt sich für das Vorzeichenprodukt

für das rechte Rad: sign **(d$\omega$/dt)** . sign **b** = (+1)(+1) = +1 und für das linke Rad: sign **(d$\omega$/dt)** . sign **b** = (-1)(+1) = -1.

Es ergibt sich also anhand des Vorzeichenproduktes dieselbe Unterscheidung zwischen dem linken Rad und dem rechten Rad wie im zuerst angenommenen Fall. Die Unterscheidung zwischen dem linken und dem rechten Rad ist unabhängig davon, ob das Fahrzeug beschleunigte oder verzögerte, eindeutig.

Hat man auf diese Weise zwischen linken und rechten Rädern unterschieden, kann man bei Fahrzeugen mit zwei Achsen mit Hilfe von nur zwei Antennen, von denen die eine den Rädern auf der vorderen Achse des Fahrzeuges und die andere den Rädern auf der hinteren Achse des Fahrzeuges zugeordnet ist, auch noch unterscheiden, welches der linken Räder vorne und und welches hinten ist, und welches der rechten Räder vorne und und welches hinten ist, indem man die Intensität (Empfangsamplitude) der empfangenen Signale auswertet. Eine im Bereich der Vorderachse angeordnete Antenne wird nämlich die Signale, die von den Vorderrädern stammen, im Mittel mit größerer Amplitude empfangen als die Signale, die von den Hinterrädern stammen. Umgekehrt wird eine Antenne, die sich im Bereich der Hinterachse befindet, von den Hinterrädern stammende Signale im Mittel mit größerer Amplitude empfangen als Signale, die von den Vorderrädern stammen. Dazu müssen die Antennen gar nicht einmal in der Mitte zwischen rechten und linken Rädern liegen, sondern können auch außermittig angeordnet sein, da jedenfalls durch Kombination der Informationen über die Drehrichtung und die Empfangsamplitude die Unterscheidung zwischen vorne und hinten möglich ist.

Bei Fahrzeugen mit mehr als zwei Achsen kann man so vorgehen, daß man jeder Achse eine eigene Antenne zuordnet.

Es ist sogar möglich, bei einem Fahrzeug mit zwei Achsen mit nur einer einzigen Antenne auszukommen, wenn diese entweder näher bei der Vorderachse oder näher bei der Hinterachse so angeordnet ist, daß sie in der Lage ist, Signale von allen vier Rädern mit hinreichender Amplitude zu empfangen. Für das Bestimmen der Signalintensitäten kann nicht nur ein einziges Signal herangezogen werden, sondern eine Folge von mehreren von ein-und-demselben Rad stammenden Signalen, um die Genauigkeit der Intensitätsbestimmung zu erhöhen. Hinsichtlich eines dazu geeigneten statistischen Verfahrens wird auf die Offenbarung in der DE 196 08 478 A1 und der DE 196 08 479 A1 ausdrücklich Bezug genommen.

Möglicherweise erhebt sich der vom Einfluß der Erdbeschleunigung g herrührende Wechselanteil im Signal des Tangentialbeschleunigungssensors nicht sehr deutlich über den Signaluntergrund. Rauschen, Vibrationen und andere vor allem bei höheren Fahrgeschwindigkeiten auftretende Störeinflüsse im Beschleunigungssignal können dazu führen, daß die eine oder die andere Bestimmung der Drehzahl des Rades oder ihres Kehrwertes und deren zeitliche Änderung falsch sind. Um die Zuverlässigkeit der Unterscheidung zwischen Rädern auf der rechten Seite und auf der linken Seite des Fahrzeuges zu erhöhen, wird in vorteilhafter Weiterbildung der Erfindung das Produkt, welches als Kriterium für die Unterscheidung von Rädern auf der rechten Seite von Rädern auf der linken Seite gebildet wird, in zeitlicher Aufeinanderfolge wiederholt gebildet und integriert. Angenommen, das als Kriterium gebildete Produkt habe im Einzelfall den Wert **-1** Wird das Produkt immer richtig ermittelt, werden durch die Integration ausschließlich die Werte **-1** addiert und es ergibt sich ein eindeutig negativer Wert durch die Integration. Im Falle von Fehlmessungen können in der Folge der **-1** - Werte auch **+1** - Werte auftreten. Unter der plausiblen Annahme, daß die richtigen Werte aber überwiegen, wird auch in diesem mit Störungen behafteten Fall das Integral im Laufe der Zeit deutlich negativ werden. Die Integrationszeit, die dafür angewendet wird, kann nach Erfahrungswerten so festgelegt werden, daß eine Stabilisierung des Integralwertes auf einen positiven Wert oder auf einen negativen Wert auf jeden Fall gewährleistet ist.

Um zwischen Rädern auf der rechten Seite des Fahrzeuges und Rädern auf der linken Seite des Fahrzeuges unterscheiden zu können, kommt es letztlich nur darauf an, das als Kriterium gebildete **Vorzeichen** mit hinreichender Zuverlässigkeit zu ermitteln. Mit welchem Zahlenwert das Vorzeichen verknüpft ist, ist gleichgültig. Deshalb kann bei der Bestimmung des Produktes aus dem Vorzeichen der Tangentialbeschleunigung **b** und der zeitlichen Änderung **dT/dt** der Periodendauer **T** oder der zeitlichen Änderung **d$\omega$/dt** der Drehzahl $\omega$ des Rades mit einem beliebigen Zahlenwert verknüpft sein. Anders ausgedrückt: Es ist nicht erforderlich, die gemessene Tangentialbeschleunigung **b** und die ermittelte zeitliche Änderung **dT/dt** der Periodendauer **T** bzw. die ermittelte zeitliche Änderung **d$\omega$/dt** der Drehzahl $\omega$ jeweils auf einen Einheitswert zu normieren, bevor die Werte zur Ermittlung des Vorzeichens des Produktes miteinander multipliziert werden. Es kann vielmehr der momentane Wert der Tangentialbeschleunigung **b**, so wie er sich aus der Messung oder Auswertung ergibt mit dem momentanen Wert der zeitlichen Änderung **dT/dt** der Periodendauer **T** oder der zeitlichen Änderung **d$\omega$/dt** der Drehzahl $\omega$ des Rades vorzeichengerecht multipliziert und über die Zeit integriert werden, um ein sicheres Kriterium für die Unterscheidung von rechten Rädern und linken Rädern zu erhalten.

Figur 1     zeigt schematisch den erfindungsgemäßen Verfahrensablauf beim Unterscheiden zwischen Rädern auf der rechten Fahrzeugseite und Rädern auf der linken Fahrzeugseite, und

Figur 2     zeigt schematisch den Einfluß der Erdbeschleunigung auf die Messung der Tangentialbeschleunigung an einem Rad.

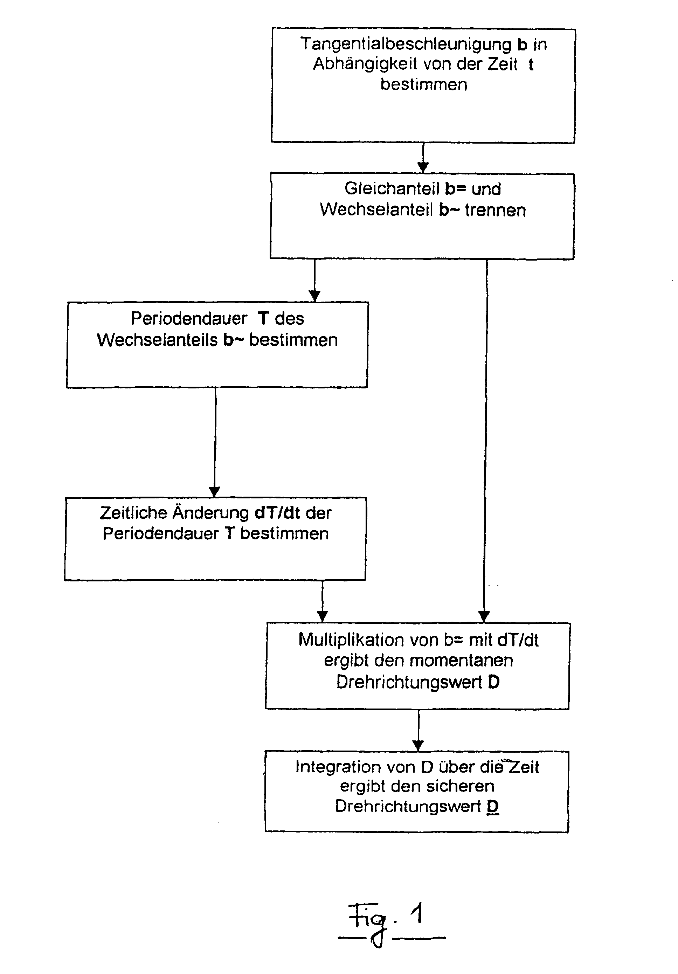

Gemäß Figur 1 wird zunächst für ein ausgewähltes Rad vom Beschleunigungssensor in der Radelektronik die **T**angentialbeschleunigung **b** in Abhängigkeit von der Zeit t bestimmt. Im zweiten Schritt werden durch Filterung des vom Beschleunigungssensor stammenden elektrischen Signales der Tangentialbeschleunigung b deren Gleichanteil b= und der vom Einfluß der Erdbeschleunigung g herrührende Wechselanteil **b**~ voneinander getrennt. Im dritten Schritt wird die Periodendauer **T** des Wechselanteils **b**~ bestimmt. Im vierten Schritt wird die zeitliche Änderung **dT/dt** der Periodendauer **T** bestimmt. Im fünften Schritt wird der Gleichanteil **b=** mit der zeitlichen Änderung **dT/dt** vorzeichenrichtig multipliziert. Das Ergebnis ist ein mit einem Vorzeichen behafteter Wert **D**, welcher hier als der momentane Drehrichtungswert bezeichnet wird. Im sechsten Schritt wird der momentane Drehrichtungswert über eine gewisse Zeitspanne integriert und ergibt einen sicheren Drehrichtungswert **D**:

$$D = {}_{t1}^{t2} \int D dt$$

Die Integrationszeit $t_2$ - $t_1$ kann nach Erfahrungswerten fest vorgewählt sein, kann aber auch flexibel derart gewählt werden. daß die Auswerteschaltung, in welcher die Integration durchgeführt wird, den Integrationswert laufend daraufhin überprüft, ob sich sein Vorzeichen stabilisiert und die Integration abbricht, wenn sich das Vorzeichen stabilisiert hat. Aus dem Vorzeichen, welches sich stabilisiert hat, kann dann eindeutig geschlossen werden, ob sich das beobachtete Rad auf der rechten Fahrzeugseite oder auf der linken Fahrzeugseite befindet.

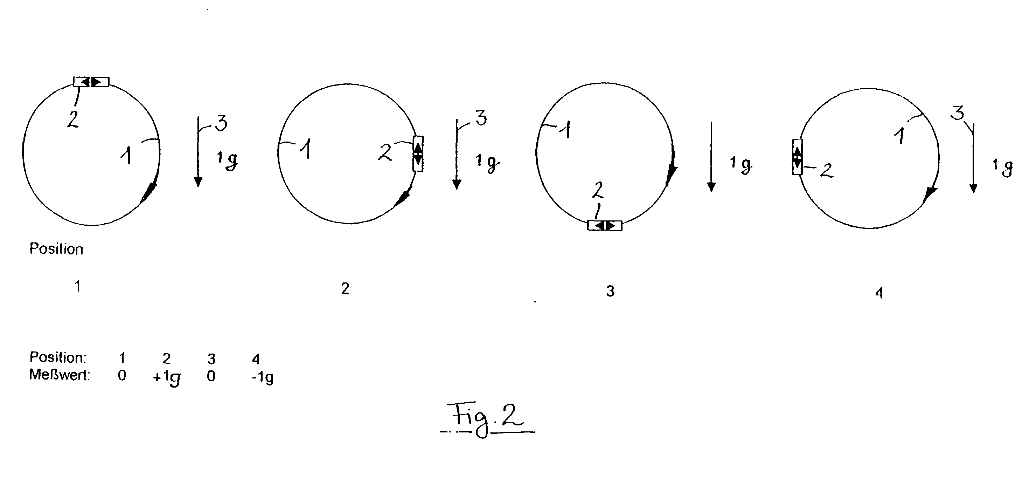

Anhand der Darstellung in Figur 2 versteht man leicht, wie es zum Einfluß der Erdbeschleunigung **g** auf die gemessene **T**angentialbeschleunigung **b** kommt. Figur 2 zeigt ein Rad 1 mit einer daran angebrachten Radelektronik 2 in vier verschiedenen Stellungen, die sich jeweils um eine Vierteldrehung des Rades voneinander unterscheiden. Die Erdbeschleunigung **g** wirkt immer senkrecht nach unten in Richtung des Pfeils 3. In der Position 1 befindet sich die Radelektronik 2 in ihrer höchsten Stellung. In dieser Stellung wirkt die Erdbeschleunigung **g** senkrecht zur Tangentialbeschleunigung **b** und ändert deren Wert nicht.

In Position 2 hat sich das Rad 1 um eine Vierteldrehung rechts herum gedreht. Die an der Radelektronik 2 auftretende Tangentialbeschleunigung **b** ist in diesem Fall der Erdbeschleunigung **g** gleichgerichtet, so daß die Tangentialbeschleunigung **b** momentan um die **E**rdbeschleunigung **g** erhöht wird.

In der Position 3 hat sich das Rad 1 um eine weitere Vierteldrehung nach rechts gedreht und die Radelektronik 2 befindet sich in ihrer tiefsten Stellung. Die Tangentialbeschleunigung **b**, die an der Radelektronik 2 auftritt, steht rechtwinklig zur Erdbeschleunigung **g** und wird deshalb durch diese nicht geändert.

In der Position 4 ist das Rad 1 um eine weitere Vierteldrehung nach rechts weitergedreht worden. In dieser Stellung verläuft die an der Radelektronik 2 auftretende **T**angentialbeschleunigung **b** bei beschleunigtem Fahrzeug der Erdbeschleunigung **g** entgegengerichtet, so daß die Erdbeschleunigung **g** die Tangentialbeschleunigung **b** verkleinert. Der Einfluß der Erdbeschleunigung **g** auf die Tangentialbeschleunigung **b** ist in der Figur 1 angegebenen kleinen **T**abelle mit den Meßwerten 0, 1 g, 0, und -1g angegeben.

Der Verfahrensschritt 1, das Bestimmen der **T**angentialbeschleunigung **b** in Abhängigkeit von der Zeit, muß in der jeweiligen Radelektronik 2 durchgeführt werden. Die weiteren Verfahrensschritte werden am besten in der zentralen Auswerteelektronik des Empfängers durchgeführt, welchem die gemessene Tangentialbeschleunigung **b** in Form von Funksignalen zugesandt wird.

In einer anderen vorteilhaften Weiterbildung der Erfindung wird die auf erfindungsgemäße Weise ermittelte Drehzahl ω des Rades dazu benutzt, um den Sender der Radelektronik zu steuern. Das macht es möglich, in weniger gefährlichen Fahrzuständen den Sender in größeren Zeitabständen zu aktivieren als in potentiell gefährlicheren Fahrzuständen. Insbesondere ist es möglich, den Sender so zu steuern, daß die Zeitabstände, in denen er sendet, im Normalfall mit zunehmender Drehzahl des Rades abnehmen. Diese Zeitabstände, welche hier auch als zweite Zeitabstände bezeichnet werden, sind im Normalfall größer als die ersten Zeitabstände, in welchen die Radelektronik Messungen des Reifendrucks vornimmt. Solange die Messungen des Reifendruckes keine gefährliche Situation anzeigen (Normalfall), ist es nicht erforderlich, jeden ungefährlichen Meßwert an den Empfänger zu senden und dem Fahrer zur Kenntnis zu geben. Es genügt deshalb in diesem Normalfall, daß sich die Radelektronik nur in größeren zweiten Zeitabständen beim Empfänger meldet, um ihre Funktionsfähigkeit anzuzeigen. Es ist sinnvoll, diese zweiten Zeitabstände bei geringerer Fahrgeschwindigkeit größer zu wählen als bei hoher Fahrgeschwindigkeit, und das wird auf einfache Weise durch die erfindungsgemäße Bestimmung der Drehzahl in der Radelektronik ermöglicht. Wird in der Radelektronik anstelle der Drehzahl ω deren Kehrwert, die Periode **T**, ermittelt, kann die Steuerung der zweiten Zeitabstände des Senders in entsprechender Weise erfolgen.

In gefährlichen Fällen. wenn der Drucksensor eine gefährliche Druckabweichung gemessen hat, können in Abweichung vom Normalzustand die zweiten Zeitabstände auf die ersten Zeitabstände verringert und auch die ersten Zeitabstände gegenüber dem Normalfall verkürzt werden, um durch erhöhte Meß- und Senderate die möglicherweise gefährliche Druckabweichung, insbesondere einen schnellen Druckabfall, erkennen und darauf reagieren zu können.

**Patentansprüche**

1. Verfahren zum Bestimmen der Drehzahl eines Rades an einem Fahrzeug, wozu an dem Rad ein Beschleunigungssensor angebracht ist, wobei als Drehzahl des Rades die Frequenz ω eines vom Einfluß der Erdbeschleunigung g verursachten Wechselsignals bestimmt wird, welches in dem vom Beschleunigungssensor gelieferten Beschleunigungssignal enthalten ist, **dadurch gekennzeichnet, daß** in diesem Verfahren zum Unterscheiden zwischen einem rechten Rad und einem linken Rad eines Fahrzeuges, wobei an beiden Rädern ein Beschleunigungssensor angebracht ist und beide Beschleunigungssensoren sich an den Rädern in übereinstimmender Einbaulage befinden,

   - eine sich aus dem Bewegungszustand des jeweiligen Rades ergebenden Tangentialbeschleunigung **b** gemessen,
   - das Vorzeichen der Tangentialbeschleunigung b ermittelt,
   - als Drehzahl des Rades die Frequenz ω des im Tangentialbeschleunigungssignal enttialtenen, vom Einfluß der Erdbeschleunigung **g** verursachten Wechsetsignals beobachtet,
   - bei einer zeitlichen Änderung der Drehzahl das Vorzeichen der Änderung bestimmt und
   - das Produkt aus dem Vorzeichen der Tangentialbeschleunigung **b** und aus dem Vorzeichen der Drehzahländerung des betreffenden Rades gebildet wird.

2. Verfahren zum Bestimmen des Kehrwertes der Drehzahl eines Rades an einem Fahrzeug, wozu an dem Rad ein Beschleunigungssensor angebracht ist, wobei als Kehrwert der Drehzahl des Rades die Periode **T** eines vom Einfluß der Erdbeschleunigung **g** verursachten Wechselsignals bestimmt wird, welches in dem vom Beschleunigungssensor gelieferten Beschleunigungssignal enthalten ist, **dadurch gekennzeichnet, daß** in diesem Verfahren zum Unterscheiden zwischen einem rechten Rad und einem linken Rad eines Fahrzeuges, wobei an beiden Rädern ein Beschleunigungssenso angebracht ist und beide Beschleunigungssensoren sich an den Rädern in übereinstimmender Einbaulage befinden,

   - eine sich aus dem Bewegungszustand des jeweiligen Rades ergebenden Tangentialbeschleunigung **b** gemessen,
   - das Vorzeichens der Tangentialbeschleunigung **b** ermittelt,
   - die Periode **T** eines im Tangentialbeschleunigungssignal enthaltenen, vom Einfluß der Erdbeschleunigung **g** verursachten Wechselsignals beobachtet,

   - bei einer zeitlichen Änderung der Periode **T** das Vorzeichen der Änderung bestimmt und
   - das Produkt aus dem Vorzeichen der Tangentialbeschleunigung **b** und aus dem Vorzeichen der Änderung der Periode **T** des betreffenden Rades gebildet wird.

3. Verfahren nach Anspruch **1**, **dadurch gekennzeichnet, daß** das vorzeichengerechte Produkt aus der Tangentialbeschleunigung b und der zeitlichen Änderung der Drehzahl ω über eine Zeitspanne integriert wird.

4. Verfahren nach Anspruch 2, **dadurch gekennzeichnet, daß** das vorzeichengerechte Produkt aus der Tangentialbeschleunigung b und der zeitlichen Änderung der Periode T über eine Zeitspanne integriert wird.

5. Verfahren nach Anspruch 3 oder 4, **dadurch gekennzeichnet, daß** so lange integriert wird, bis sich das Vorzeichen des Integralwertes stabilisiert hat

6. Verfahren nach Anspruch 1, **dadurch gekennzeichnet, daß** in diesem Verfahren in einer Einrichtung zum Überwachen und drahtlosen Signalisieren einer Druckänderung in Luftreifen von Rädern an Fahrzeugen, welche am jeweiligen Rad angebracht ist und
   eine Stromquelle,
   einen Beschleunigungssensor zur Ermittlung der Drehzahl des Rades,
   einen Drucksensor, welcher in ersten Zeitabständen den Reifendruck mißt, und
   einen Sender enthält, welcher in zweiten Zeitabständen, welche größer als oder gleich den ersten Zeitabständen sind, eine Information über den gemessenen Reifendruck und über die gemessene Tangentialbeschleunigung b an einen im Fahrzeug angeordneten Empfänger übermittelt,
   die zweiten Zeitabstände abhängig von der Drehzahl ω des betreffenden Rades gesteuert werden.

7. Verfahren nach Anspruch 2, **dadurch gekennzeichnet, daß** in diesem Verfahren in einer Einrichtung zum Überwachen und drahtlosen Signalisieren einer Druckänderung in Luftreifen von Rädern an Fahrzeugen, welche am jeweiligen Rad angebracht ist und
   eine Stromquelle,
   einen Beschleunigungssensor zur Ermittlung der Drehzahl des Rades,
   einen Drucksensor, welcher in ersten Zeitabständen den Reifendruck mißt, und
   einen Sender enthält, welcher in zweiten Zeitabständen, welche größer als oder gleich den ersten Zeitabständen sind, eine Information über den gemessenen Reifendruck und über die gemessene Tangentialbeschleunigung **b** an einen im Fahrzeug angeordneten Empfänger übermittelt,

die zweiten Zeitabstände abhängig vom Kehrwert **T** der Drehzahl ω gesteuert werden.

## Claims

1. Method for determining the speed of a wheel on a motor vehicle, for which purpose an acceleration sensor is mounted on the wheel, wherein the frequency ω of an alternating signal produced by the influence of the gravitational acceleration **g** and contained in the acceleration signal supplied by the acceleration sensor is determined as the speed of the wheel, **characterised in that** for the purpose of distinguishing in this method between a right wheel and a left wheel of a vehicle, in which an acceleration sensor is provided on both wheels and both acceleration sensors are arranged on the wheels in equal mounting positions,

   - the tangential acceleration **b** resulting from the motion state of the respective wheel is measured;
   - the sign of the tangential acceleration **b** is determined;
   - the frequency ω of an alternating signal contained in the tangential acceleration signal and produced by the influence of the gravitational acceleration **g** is observed as the speed of the wheel;
   - when the speed varies over time the sign of the variation is determined; and
   - the product of the sign of the tangential acceleration **b** and the sign of the variation in speed of the respective wheel is formed.

2. Method for determining the reciprocal value of the speed of the wheel on a vehicle, for which purpose an acceleration sensor is mounted on the wheel, wherein the period **T** of an alternating signal produced by the influence of the gravitational acceleration **g** and contained in the acceleration signal supplied by the acceleration sensor is determined as the reciprocal value of the speed of the wheel, **characterised in that** for the purpose of distinguishing in this method between a right wheel and a left wheel of a vehicle, in which an acceleration sensor is provided on both wheels and both acceleration sensors are arranged on the wheels in equal mounting positions,

   - a tangential acceleration **b** resulting from the motion state of the respective wheel is measured;
   - the sign of the tangential acceleration **b** is determined;

   - the period **T** of an alternating signal contained in the tangential acceleration signal and produced by the influence of the gravitational acceleration **g** is observed;
   - when the period **T** varies over time the sign of the variation is determined; and
   - the product of the sign of the tangential acceleration **b** and the sign of the variation of the period **T** of the respective wheel is formed.

3. The method as defined in Claim 1, **characterised in that** the signed product of the tangential acceleration **b** and the variation over time of the speed ω , which product has been formed giving due consideration to the sign of **b** and ω , is integrated over a period of time.

4. The method as defined in Claim 2, **characterised in that** the signed product of the tangential acceleration **b** and the variation over time of the period **T** , which product has been formed giving due consideration to the sign of **b** and **T** , is integrated over a period of time.

5. The method as defined in Claim 3 or Claim 4, **characterised in that** the integration process is continued until the sign of the value of the integral has stabilised.

6. The method as defined in claim 1, **characterised in that** when applying this method to an equipment for monitoring and signalling by radio any pressure change in pneumatic tyres of wheels on vehicles, which equipment is mounted on the respective wheel and comprises
   a current source,
   an acceleration sensor for determining the speed of the wheel,
   a pressure sensor measuring the tyre pressure at first time intervals, and
   a transmitter that transmits at second time intervals, that are longer than or equal to the first time intervals, an information on the measured tyre pressure as well as on the measured tangential acceleration b to a receiver located in the vehicle,
   the second time intervals are controlled in dependence on the speed ω of the respective wheel.

7. The method as defined in claim 2, **characterised in that** when applying this method to an equipment for monitoring and signalling by radio any pressure change in pneumatic tyres of wheels on vehicles, which equipment is mounted on the respective wheel and comprises
   a current source.
   an acceleration sensor for determining the speed of the wheel,
   a pressure sensor measuring the tyre pressure at first time intervals, and
a transmitter that transmits at second time intervals, which are longer than or equal to the first time intervals, an information on the measured tyre pressure as well as on the measured tangential acceleration **b** to a receiver located in the vehicle,
the second time intervals are controlled in dependence on the reciprocal value **T** of the speed ω.

## Revendications

1. Procédé pour la détermination de la vitesse de rotation d'une roue sur un véhicule..automobile, un capteur de l'accélération étant appliqué à cet effet sur la roue, la fréquence ω d'un signal d'inversion influencé par l'accélération due à la pesanteur g étant déterminée à titre de vitesse de rotation de la roue, ledit signal étant contenu dans le signal d'accélération fourni par le capteur de l'accélération, **caractérisé en ce que**, dans ce procédé, pour opérer une distinction entre une roue droite et une roue gauche d'un véhicule automobile dans lequel un capteur de l'accélération est appliqué sur les deux roues et les capteurs de l'accélération sont montés de manière concordante sur les roues :

   - on mesure une accélération tangentielle b générée'par l'état de mouvement de la roue respective,
   - on détermine le signe de l'accélération tangentielle b,
   - on observe, à titre de vitesse de rotation de la roue, la fréquence ω du signal d'inversion influencé par l'accélération due à la pesanteur g, ledit signal étant contenu dans le signal d'accélération tangentielle,
   - lors d'une modification dans le temps de la vitesse de rotation, on détermine le signe de la modification, et
   - on calcule le produit du signe de l'accélération tangentielle b et du signe de la modification de la vitesse de rotation de la roue correspondante.

2. Procédé pour déterminer la réciproque de la vitesse de rotation d'une roue sur un véhicule automobile, un capteur de l'accélération étant appliqué à cet effet sur la roue, dans lequel on détermine, à titre de réciproque de la vitesse de rotation de la roue, la période T d'un signal d'inversion influencé par l'accélération due à la pesanteur g, ledit signal étant contenu dans le signal d'accélération fourni par le capteur de l'accélération, **caractérisé en ce que**, dans ce procédé, pour opérer une distinction entre une roue droite et une roue gauche d'un véhicule automobile dans lequel un capteur de l'accélération est appliqué sur les deux roues et les capteurs de l'accélération sont montés de manière concordante sur les roues :

   - on mesure une accélération tangentielle b générée par l'état de mouvement de la roue respective,
   - on détermine le signe de l'accélération tangentielle b,
   - on observe la période T d'un signal d'inversion influencé par l'accélération due à la pesanteur g, ledit signal étant' contenu dans le signal d'accélération tangentielle,
   - lors d'une modification dans le temps de la période T, on détermine le signe de la modification, et
   - on calcule le produit du signe de l'accélération tangentielle b et du signe de la modification de la période T de la roue correspondante.

3. Procédé selon la revendication 1, **caractérisé en ce que** le produit muni d'un signe issu de l'accélération tangentielle b et de la modification dans le temps de la vitesse de rotation ω est intégré dans un intervalle de temps.

4. Procédé selon la revendication 1, **caractérisé en ce que** le produit muni d'un signe issu de l'accélération tangentielle b et de la modification dans le temps de la période T est intégré dans un intervalle de temps.

5. Procédé selon la revendication 3 ou 4, **caractérisé en ce que** l'intégration se prolonge jusqu'à la stabilisation du signe de l'intégrale.

6. Procédé selon la revendication 1, **caractérisé en ce que**, dans ce procédé, dans un dispositif pour la surveillance et de la signalisation sans fil d'une modification de pression dans des bandages pneumatiques de roues sur des véhicules automobiles, ledit dispositif étant appliqué sur la roue respective et contenant une source de courant, un capteur de l'accélération pour déterminer la vitesse de rotation de la roue, un capteur de pression qui mesure la pression des bandages pneumatiques, dans des premiers intervalles de temps, ainsi qu'un émetteur qui transmet à un récepteur monté dans le véhicule, dans des deuxièmes intervalles de temps qui sont supérieurs ou égaux aux premiers intervalles de temps, des informations concernant la pression mesurée à des bandages pneumatiques et concernant l'accélération tangentielle b mesurée, les deuxièmes intervalles de temps sont commandés en fonction de la vitesse de rotation ω de la roue correspondante.

7. Procédé selon la revendication 2, **caractérisé en ce que**, dans ce procédé, dans un dispositif pour la surveillance et la signalisation sans fil d'une modification de pression dans des bandages pneumatiques de roues sur des véhicules automobiles, ledit dispositif étant appliqué sur la roue respective et contenant une source de courant, un capteur de l'accélération pour déterminer la vitesse de rotation de la roue, un capteur de pression qui mesure la pression des bandages pneumatiques, dans des premiers intervalles de temps, ainsi qu'un émetteur qui transmet à un récepteur monté dans le véhicule, dans des deuxième intervalles de temps qui sont supérieurs ou égaux aux premiers intervalles de temps, des informations concernant la pression mesurée à des bandages pneumatiques et concernant l'accélération tangentielle b mesurée, les deuxièmes intervalles de temps sont commandés en fonction de la réciproque T de la vitesse de rotation $\omega$.

Tangentialbeschleunigung **b** in
Abhängigkeit von der Zeit **t**
bestimmen

Gleichanteil **b=** und
Wechselanteil **b~** trennen

Periodendauer **T** des
Wechselanteils **b~** bestimmen

Zeitliche Änderung **dT/dt** der
Periodendauer **T** bestimmen

Multiplikation von b= mit dT/dt
ergibt den momentanen
Drehrichtungswert **D**

Integration von D über die Zeit
ergibt den sicheren
Drehrichtungswert **D**

Fig. 1

Position

| Position: | 1 | 2 | 3 | 4 |
|-----------|---|------|---|-----|
| Meßwert: | 0 | +1g | 0 | -1g |

Fig. 2

EP 1 269 202 B1